(19) Europäisches Patentamt
European Patent Office
Office européen des brevets

(11) **EP 0 588 272 B1**

(12) **EUROPÄISCHE PATENTSCHRIFT**

(45) Veröffentlichungstag und Bekanntmachung des Hinweises auf die Patenterteilung:
**23.10.1996 Patentblatt 1996/43**

(51) Int. Cl.⁶: **B65F 3/04**, G01G 19/08

(21) Anmeldenummer: 93114646.8

(22) Anmeldetag: **12.09.1993**

(54) **Vorrichtung zum Wiegen und Entleeren von Grossraumbehältern**

Device for weighing and emptying large capacity containers

Dispositif pour le pesage et vidage de récipients de grande capacité

(84) Benannte Vertragsstaaten:
**AT CH DE FR GB LI LU NL**

(30) Priorität: **18.09.1992 DE 4231211**

(43) Veröffentlichungstag der Anmeldung:
**23.03.1994 Patentblatt 1994/12**

(73) Patentinhaber:
• **Zöller-Kipper GmbH**
  **D-55076 Mainz (DE)**
• **CARL SCHENCK AG**
  **D-64293 Darmstadt (DE)**

(72) Erfinder:
• **Gajewski, Arno**
  **D-55424 Münster-Sarmsheim (DE)**

• **Pieperhoff, Hans-Joachim**
  **D-55130 Mainz (DE)**
• **Müller, Reinhard**
  **D-76437 Rastatt 16 (DE)**
• **Brauer, Martin**
  **D-64295 Darmstadt (DE)**
• **Rettig, Manfred**
  **D-64367 Mühltal 4 (DE)**

(74) Vertreter: **Fuchs, Luderschmidt & Partner**
**Patentanwälte**
**Postfach 46 60**
**65036 Wiesbaden (DE)**

(56) Entgegenhaltungen:
EP-A- 0 502 563          WO-A-92/11515
DE-U- 8 707 422          US-A- 4 714 122

**Beschreibung**

Die Erfindung betrifft eine Vorrichtung zum Entleeren von Großraumbehältern in einen Sammelbehälter, mit zwei parallel angeordneten und am Sammelbehälter um eine horizontale Achse drehbar angelenkten Schwenkarmen, wobei jeder Schwenkarm eine Aufnahmeeinrichtung für die Großraumbehälter aufweist.

Gewerbemüll wird in der Regel in Großraumbehältern gesammelt, die in Spezialfahrzeuge entleert werden. Am Heck dieser Fahrzeuge sind um eine horizontale, quer zur Fahrzeuglängsrichtung liegende Achse drehbar angelenkte Schwenkarme angeordnet, die jeweils mittels eines Hydraulikzylinders bewegt werden, der am Fahrzeug und am freien Ende des Schwenkarmes angelenkt ist. Die Großraumbehälter werden an den Schwenkarmen mittels Behälteraufnahmeeinrichtungen befestigt, zu denen Aufnahmehaken zum Ergreifen der an der Behälteraußenwand angebrachten Tragzapfen und Haken zum Einhängen von Ketten oder dergleichen zählen. Durch die unterschiedlichen Befestigungsmöglichkeiten können auch unterschiedlich große Behälter entleert werden.

Ebenso wie beim Hausmüll gehen auch beim Gewerbemüll die Bestrebungen dahin, die Gebühren für die Müllabfuhr am Gewicht zu orientieren, um hier einen gewissen Anreiz zur Müllvermeidung zu schaffen.

Aus der EP-A-255 624 ist eine Wiegeeinrichtung bekannt, bei der die Kraftaufnehmer an einem solchen Element der Einschüttvorrichtung angeordnet sind, das direkt oder über ein Zwischenglied mit dem festen Träger verbunden ist. Aufgrund der Konstruktion der Entleervorrichtung mit Schwenkarmen kann diese bekannte Wiegeeinrichtung, die für Hausmüllentleervorrichtungen konzipiert wurde, nicht übertragen werden. Insbesondere wegen der unterschiedlichen Aufnahmepositionen der Großraumbehälter am Schwenkarm ergeben sich unterschiedlich lange Lastarme, die bei der Gewichtsberechnung berücksichtigt werden müßten.

Von Gabelstaplern ist aus der DE-A-25 57 597 eine Wiegeeinrichtung bekannt, die mit vier an den Lastarmen angeordneten Kraftaufnehmern arbeitet, die mit Wälzlagerrollen bestückt sind, auf dem die die Last aufnehmenden Schutzkästen aufliegen. Damit soll ein reibungsfreies Messen der Last ermöglicht werden. Die bewegliche Anordnung von den die Last tragenden Schutzkästen ist für den Einsatz an Schwenkarmen ungeeignet, weil dadurch eine instabile Anordnung geschaffen würde, die keine exakte Gewichtsbestimmung zuläßt. Da bei Gabelstaplern die Lastarme immer in horizontaler Stellung verbleiben, sind auch keine zusätzlichen Maßnahmen erforderlich, um Meßfehler, die beim Schwenken der Last auftreten, zu korrigieren.

Aus der US-A-4,714,122 ist ein Überkopflader bekannt, bei dem die Lastarme ebenfalls mit Kraftaufnehmern bestückt sind. Auf den Kraftaufnehmern liegt eine Platte auf, die federnd gelagert ist und gegen Verrutschen gesichert ist. Die durch die Lagerung der Platte bedingten Reibungs- und Federkräfte führen zu einem Meßfehler, der bei der Auswertung der Gewichtsdaten berücksichtigt werden muß. Da ebenfalls die Wiegung bei horizontaler Ausrichtung der Lastarme durchgeführt wird, treten keine Meßfehler aufgrund des Schwenkwinkels auf.

Demgegenüber sind die Schwenkarme der Entleervorrichtung für Großraumbehälter konstruktionsbedingt bereits in Ausgangsstellung schräg angeordnet. Bevor eine Wiegung durchgeführt werden kann, müssen die Schwenkarme in eine Schwenkposition von etwa 30° gebracht werden, damit der zu wiegende Großraumbehälter vom Boden abgehoben ist.

Aufgabe der Erfindung ist es daher, eine Vorrichtung zum Entleeren von Großraumbehältern zu schaffen, mit der das Gewicht der Großraumbehälter mit keinem oder nur geringem Meßfehler ermittelt werden kann.

Diese Aufgabe wird mit einer Vorrichtung gemäß den Merkmalen des Patentanspruchs 1 gelöst.

Die Erfindung geht aus von mehrteiligen, insbesondere zweiteiligen Schwenkarmen, wobei die Armteile über Meßaufnehmer miteinander verbunden sind. Jeder Schwenkarm weist ein erstes, am Sammelbehälter angelenktes Armteil und ein zweites, die Aufnahmeeinrichtung tragendes Armteil auf, wobei das zweite Armteil das erste Armteil zumindest teilweise in sich aufnimmt und in den Armteilen mindestens zwei Meßaufnehmer angeordnet sind, an denen jeweils beide Armteile befestigt sind. Dadurch wird eine Anordnung geschaffen, die stabil ist, ohne daß zusätzliche Maßnahmen erforderlich sind, um ein Verrutschen der zweiten Armteile gegenüber den ersten Armteilen zu verhindern. Da die beiden Armteile ausschließlich über die Meßaufnehmer miteinander verbunden sind, treten auch keine reibungsbedingten Meßfehler durch zusätzliche Führungselemente oder dergleichen auf.

An jedem Meßaufnehmer ist erfindungsgemäß mindestens ein Meßelement derart angeordnet, daß die Meßrichtung des Meßelementes bei einem vorgegebenen Schwenkwinkel $\alpha_s > 0$ der Schwenkarme mit der Vertikalen zusammenfällt. Üblicherweise werden Meßaufnehmer mit einem balkenförmigen Körper verwendet, der einen oder mehrere Meßelemente, beispielsweise Dehnungsmeßstreifen trägt, wobei die Meßelemente parallel zur Längsachse der balkenförmigen Körper angeordnet sind. Beim Einsatz derartiger Meßaufnehmer muß jedoch der Schwenkwinkel der Schwenkarme, bei dem die Wiegung durchgeführt wird, bei der Gewichtsauswertung berücksichtigt werden. Die gemessene Kraftkomponente ist über den $\cos\alpha_s$ mit dem tatsächlichen Behältergewicht verknüpft. Da jedoch konstruktionsbedingt der Schwenkwinkel bei der Wiegung 20° - 50°, insbesondere etwa 30° beträgt, müßte entweder dieser Schwenkwinkel exakt eingehalten werden oder aber durch Zusatzeinrichtungen der tatsächliche Schwenkwinkel exakt bestimmt werden, um den entsprechenden Korrekturfaktor bei der Auswertung einbringen zu können. Durch die in der Regel vorhandene Straßenneigung müßte, um die geforderte Genauigkeit einhalten zu können, ein geeichtes Inklinometer verwendet werden, um die exakte Schwenkstellung zu ermitteln.

Um hier Abhilfe zu schaffen, ist die Lage des Meßelementes erfindungsgemäß auf den Schwenkwinkel, bei dem die Wiegung stattfindet, bereits eingestellt. Es hat sich herausgestellt, daß Abweichungen vom Schwenkwinkel um mehrere Grad zulässig sind, ohne daß signifikante Abweichungen bei der Gewichtsbestimmung auftreten. Es wurde festgestellt, daß der Schwenkwinkel lediglich mit einer Genauigkeit von ± 3° eingehalten werden muß, um die gleiche Genauigkeit zu erzielen, die bei herkömmlichen Meßaufnehmern erreicht wird, wenn der Schwenkwinkel $\alpha$s mit einer Genauigkeit von ± 0,1° eingehalten wird. Der Meßfehler kann durch die gedrehte Anordnung der Meßelemente um etwa einen Faktor 10 gegenüber den bei herkömmlichen Meßaufnehmern gesenkt werden.

Vorzugsweise ist der Meßaufnehmer als balkenförmiger Körper ausgebildet, dessen Längsachse mit derjenigen der Armteile zusammenfällt. Das Meßelement, beispielsweise ein Dehnungsmeßstreifen, ist vertikal und bezüglich der Längsachse um den vorgegebenen Schwenkwinkel $\alpha_s$ gedreht angeordnet. Gemäß einer besonderen Ausführungsform besitzt der balkenförmige Körper zwischen seinen Endabschnitten mindestens einen gegenüber der Längsachse des balkenförmigen Körpers um den vorgegebenen Schwenkwinkel $\alpha_s$ gedrehten Abschnitt, auf dem das Meßelement angeordnet ist. Bezogen auf die Einbaulage des balkenförmigen Körpers ist der gedrehte Abschnitt um eine horizontale Achse gedreht angeordnet. Durch eine entsprechend achsparallele Ausrichtung des Meßelementes auf dem gedrehten Abschnitt steht die Meßrichtung des Meßelementes senkrecht auf der Achse des gedrehten Abschnitts.

Diese Ausgestaltung des balkenförmigen Körpers mit gedrehten Abschnitten hat den Vorteil, daß bei Erreichen des vorgegebenen Schwenkwinkels die zu messende Last optimal auf das Meßelement einwirkt, wodurch die Empfindlichkeit und die Meßgenauigkeit weiter erhöht werden.

Diese Vorteile werden nicht nur bei der statischen Wägung deutlich sondern auch bei dynamischer Wägung, da bei Durchfahren des Winkelbereichs von $\alpha_s + \Delta\alpha$ nur eine minimale Meßsignaländerung auftritt.

Vorzugsweise besteht der zweite Armteil aus einem über das erste Armteil gesteckten Rohr, in dem die Meßaufnehmer angeordnet sind. Dadurch sind die Meßaufnehmer vor schädlichen Umgebungseinflüssen (mechanischen Beschädigungen, aggressiven Medien, Temperaturschwankungen) gut geschützt, was gerade für den rauhen Alltagsbetrieb bei der Müllabfuhr von großer Bedeutung für die Zuverlässigkeit und Verfügbarkeit der Meßeinrichtungen ist.

Um einerseits die Stabilität der Entleervorrichtung zu erhöhen und andererseits keine Beeinträchtigung der Messungen durch ungleichmäßig beladene Behälter zu gewährleisten, sind die beiden zweiten Armteile über eine Verbindungsstrebe miteinander verbunden und vorzugsweise als U-förmiger Rahmen aus Hohlprofil ausgebildet. Mit den beiden Schenkeln ist der U-förmige Rahmen über die Meßaufnehmer mit den ersten Armteilen verbunden. Der U-förmige Rahmen wird in der Weise auf die ersten Armteile aufgesteckt, daß die Verbindungsstrebe an den freien Ende der ersten Armteile angeordnet ist und somit im empfindlichen Bereich der Entleervorrichtung die gewünschte Versteifung der Gesamtanordnung bewirkt.

Die Meßaufnehmer sind vorzugsweise jeweils in der Nähe der Enden der ersten und der zweiten Armteile angeordnet. Je größer der Abstand zwischen den auf dem jeweiligen Armteil angeordneten Meßaufnehmer ist, desto größer ist die Meßgenauigkeit. Da in jedem Schwenkarm mindestens zwei Meßaufnehmer vorgesehen sind, ist die Wägung unabhängig von Aufhängepunkt der Großraumbehälter am Schwenkarm. Die universelle Einsetzbarkeit der herkömmlichen Entleervorrichtungen kann somit beibehalten werden, ohne daß bei der Wiegung zusätzliche Informationen über die Länge des Lastarmes berücksichtigt werden müssen.

Die Befestigung der balkenförmigen Körper der Meßaufnehmer erfolgt vorzugsweise mittels Befestigungsbolzen, die durch den balkenförmigen Körper hindurchgesteckt sind und die mit ihren Enden am jeweilige Armteil befestigt sind. Gemäß einer besonderen Ausführungsform sind der oder die Befestigungsbolzen, die am zweiten Armteil angreifen, an ihren Enden jeweils mit einer Elastomerbuchse versehen, über die der Befestigungsbolzen im zweiten Armteil gelagert ist. Bei Belastung wird die Elastomerbuchse radial verformt. Da über diesen Befestigungsbolzen die Last in den Meßaufnehmer eingeleitet wird, kann bei extremen Belastungen eine Beschädigung des balkenförmigen Körpers dadurch vermieden werden, daß sich das erste Armteil am zweiten Armteil abstützt.

Beispielhafte Ausführungformen der Erfindung werden nachfolgend anhand der Zeichnungen näher erläutert.

Es zeigen:

Figur 1    ein Müllfahrzeug mit Entleervorrichtung in Seitenansicht,

Figur 2    die Draufsicht auf die Entleervorrichtung,

Figur 3    die Seitenansicht der Entleervorrichtung in Horizontalstellung,

Figur 4    einen Schnitt durch einen Schwenkarm längs der Linie C-D der in der Figur 2 gezeigten Ausführungsform,

Figur 5    einen Schnitt durch einen Schwenkarm gemäß einer weiteren Ausführungsform,

Figur 6 einen Schnitt durch die in Figur 2 gezeigte Ausführungsform längs der Linie E-F,

Figur 7 die Seitenansicht eines Meßaufnehmers in Schwenkstellung und

Figur 8 den in Figur 7 gezeigten Meßaufnehmer in Draufsicht und teilweise im Schnitt.

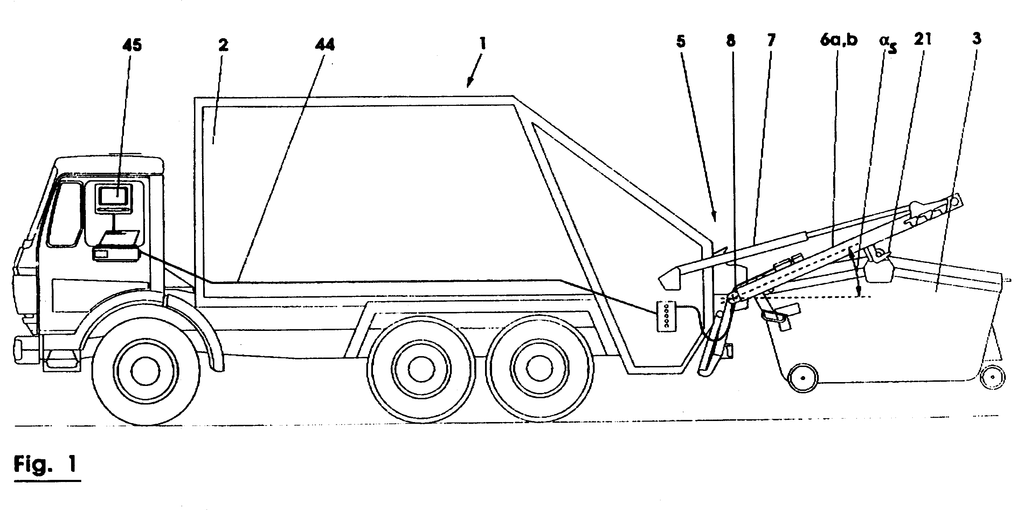

In der Figur 1 ist ein Müllfahrzeug 1 mit einem Sammelbehälter 2 dargestellt. Am Heck des Fahrzeugs 1 ist eine Entleervorrichtung 5 für Großraumbehälter 3 angebracht. Die Entleervorrichtung 5 weist zwei Schwenkarme 6a, b auf, die um die Achse 8 schwenkbar sind. Am freien Ende der Schwenkarme 6a, b ist jeweils ein Hydraulikzylinder 7 angelenkt, dessen anderes Ende am Heck des Fahrzeugs 1 befestigt ist. Die Schwenkarme 6a, b besitzen jeweils eine Behälteraufnahmeinrichtung, von der einer der beiden Aufnahmehaken 21 zu sehen ist. Mittels der Aufnahmehaken 21 wird der Großraumbehälter 3 an den an der Außenseite der Großbehälter 3 angebrachten Tragzapfen erfaßt. Die in den Schwenkarmen angeordneten Meßaufnehmer, die nachfolgend noch beschrieben werden, sind über eine Datenleitung 44 mit einer Gewichtsauswerteeinrichtung 45 verbunden, die sich im Führerhaus des Müllfahrzeugs 1 befindet.

Nach dem Erfassen des Großraumbehälters 3 werden die Schwenkarme 6a, b hochgeschwenkt, bis der vorgegebene Schwenkwinkel $\alpha_s$, bei dem die Wägung durchgeführt werden soll, erreicht ist. Nach der Messung wird der Großraumbehälter 3 in den Sammelbehälter 2 entleert und vor dem Absetzen bei Erreichen des Schwenkwinkels $\alpha_s$ wird eine zweite Wägung durchgeführt um das Leergewicht des Großbehälters 3 zu ermitteln. Die Daten werden dann in der Gewichtsauswerteeinrichtung 45 verarbeitet, wobei anhand der Müllmenge die Müllgebühr berechnet wird.

Anstelle zweier statischer Messungen vor und nach dem Entleeren können auch dynamische Messungen durchgeführt werden. Hierbei werden die Messungen immer dann durchgeführt, wenn die Schwenkarme einen vorgegebenen Schwenkwinkelbereich $\alpha_s + \Delta\alpha$ durchlaufen. Ein Anhalten der Entleervorrichtung zwecks Wägung des Großraumbehälters 3 ist dann nicht erforderlich.

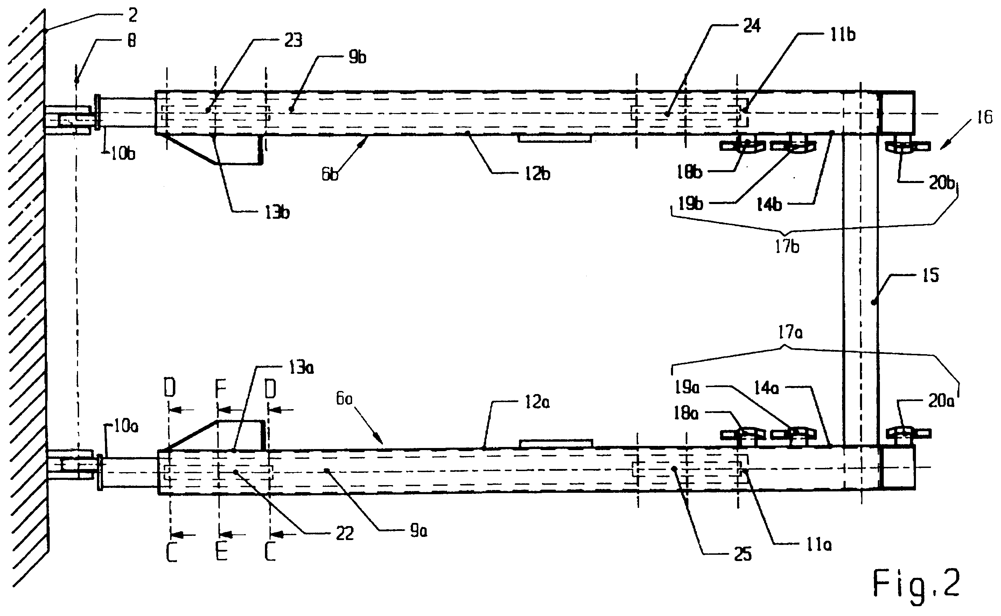

In der Figur 2 ist eine Draufsicht auf die Entleervorrichtung 5 schematisch dargestellt. Die Schwenkarme 6a und 6b sind zweiteilig ausgebildet. Der erste Armteil 9a, 9b ist am Sammelbehälter 2 um die Achse 8 schwenkbar angeordnet. Die zweiten Armteile 12a, b sind Hohlprofile, die über die ersten Armteile 9a und 9b gesteckt sind. Über eine Verbindungsstrebe 15 sind die beiden zweiten Armteile 12a, b an ihrem zweiten Ende 14a, b miteinander verbunden. Die zweiten Armteile 12a, b erstrecken sich bis in den Bereich der angelenkten Enden 10a, b der ersten Armteile 9a, b.

Innerhalb der zweiten Armteile 12a, b sind je Schwenkarm 6a, b zwei Meßaufnehmer 22, 25 und 23, 24 angeordnet, wobei der Abstand der Meßaufnehmer 22, 25 und 23, 24 ist möglichst groß gewählt ist. Dementsprechend befinden sich die Meßaufnehmer 22 bis 25 jeweils im Bereich der Enden 13a, 13b, 10a, 10b sowie 11a, b und 14a, b der Armteile 9a, b und 12a, b. Von der Aufnahmeeinrichtung 17a, b sind in dieser Darstellung die Zapfen 18a, b, 19a, b und 20a, b dargestellt, an denen beispielsweise Ketten zur Aufnahme des Großraumbehälters eingehängt werden können.

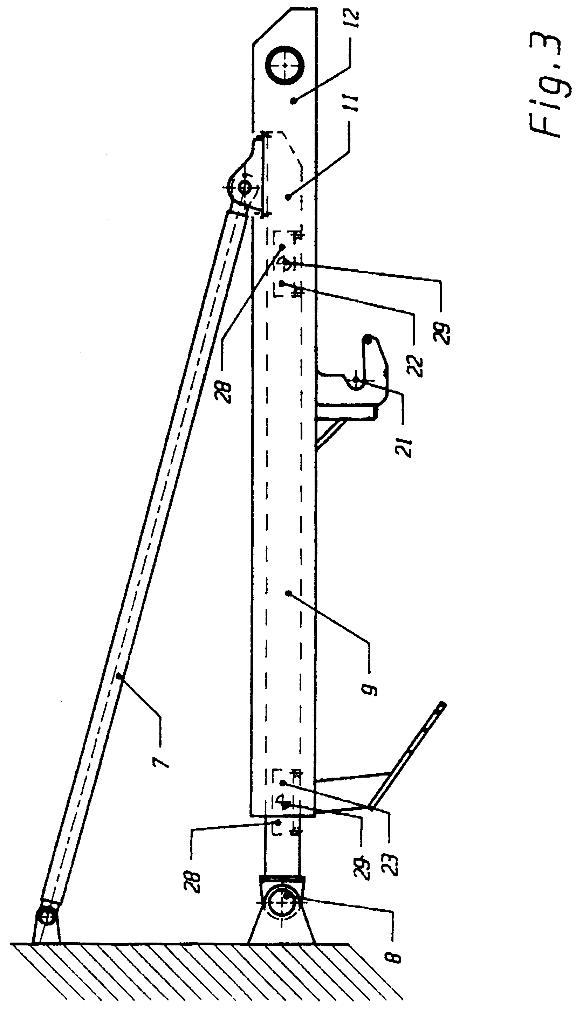

In der Figur 3 ist die Entleervorrichtung in Seitenansicht dargestellt. Der Schwenkzylinder 7 greift durch eine Öffnung an der Oberseite des zweiten Armteils 12 am freien Ende 11 des ersten Armteiles 9 an. Bei den Meßaufnehmern 22, 23 handelt es sich um solche mit einem balkenförmigen Körper 28, der mit seinen Endabschnitten auf dem ersten Armteil 9 befestigt ist. Mittels der Befestigungsbolzen 29 sind die balkenförmigen Körper 28 mit dem zweiten Armteil 12 verbunden, so daß die am zweiten Armteil 12 angehängte Last auf die balkenförmigen Elemente 28 einwirken kann. Die Schubverformung der balkenförmigen Körper 28 wird mit Meßelementen, die an dem balkenförmigen Körper 28 befestigt sind, gemessen. Die Stärke der Schubverformung ist ein Maß für die Größe der am zweiten Armteil 12 hängenden Last.

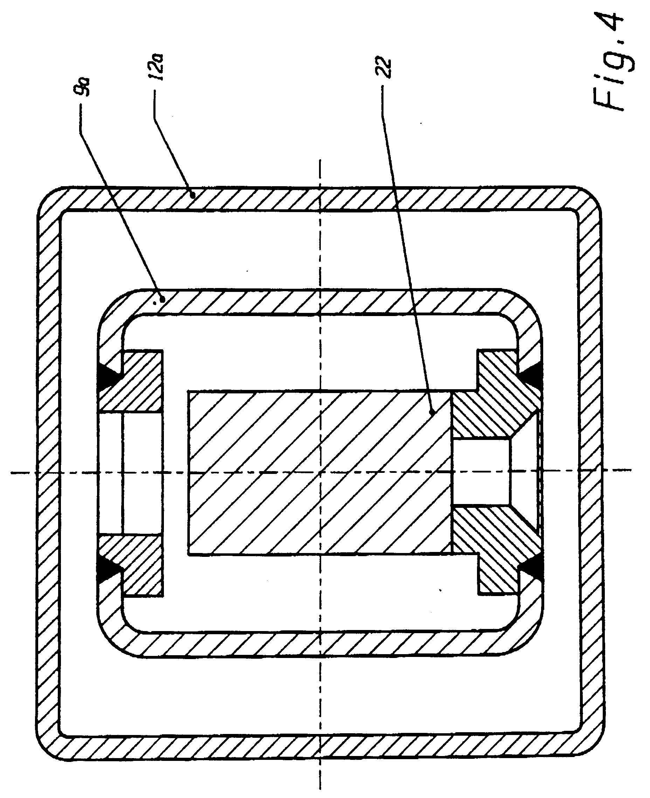

In der Figur 4 ist ein Schnitt längs der Linie C-D in Figur 2 dargestellt. Der Meßaufnehmer 22 ist in dem als Hohlprofil ausgebildeten ersten Armteil 9a angeordnet und mit seinen Endabschnitten fest mit dem ersten Armteil 9a verbunden.

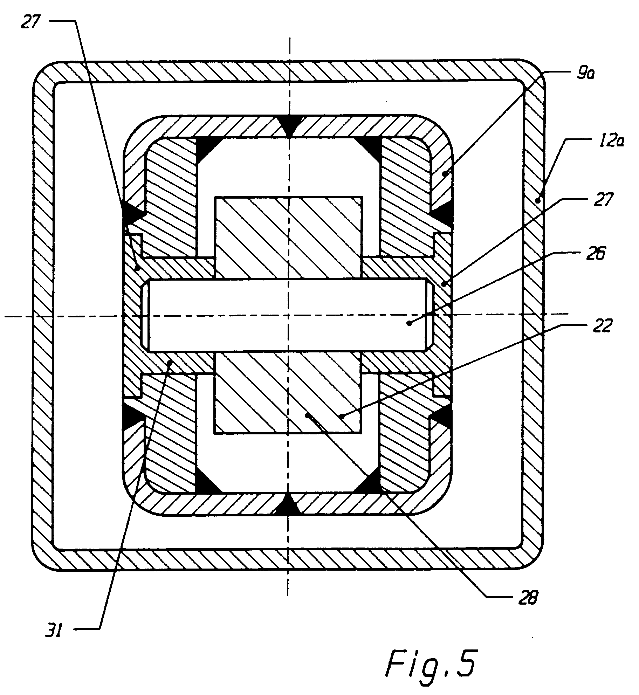

In der Figur 5 ist ein Schnitt durch einen Schwenkarm gemäß einer weiteren Ausführungsform dargestellt. Die Befestigung des Meßelementes 22 erfolgt mittels eines Befestigungsbolzens 26, der sich durch den balkenförmigen Körper 28 ertreckt und mit seinen Enden in entsprechenden Lagerausnehmungen 31 des ersten Armteils 9a hineinragt.

Es besteht die Möglichkeit, die balkenförmigen Korper 28 mit zwei Befestigungbolzen 26, die sich jeweils in den Endabschnitten des Körpers 28 befinden, am ersten Armteil 9a, b zu befestigen. Ein weiterer Befestigungsbolzen, der vorzugsweise am Mittelabschnitt des balkenförmigen Körpers 28 angeordnet ist, wäre dann mit dem zweiten Armteil 12a, b verbunden. Es besteht aber auch die Möglichkeit, den Befestigungsbolzen 29 des Mittelabschnitts mit dem ersten Armteil 9a, b zu verbinden und die beiden äußeren Befestigungsbolzen 26 mit dem zweiten Armteil 12a, b.

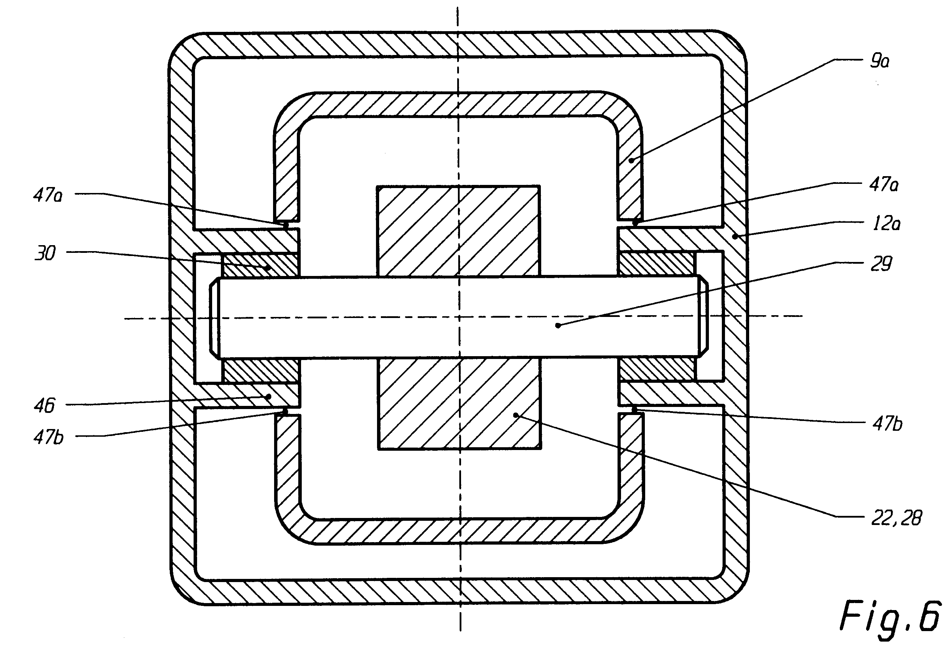

Die Befestigung des Bolzen 29 im zweiten Armteil 12a, b ist in der Schnittdarstellung der Figur 6 zu sehen. Die Enden des Befestigungsbolzens 29 sind mit einer Elastomerbuchse 30 versehen, mit denen der Befestigungsbolzen 29 in einem Rohrstutzen 46 gelagert ist. Bei Belastung wir die Elastomerbuchse radial verformt, wobei sich die Spalte vergrößern und die Spalte 47a vergrößern und die Spalte 47b abnehmen. Bei einer bestimmten Belastung verschwinden die Spalte 34b und das erste Armteil 9a liegt auf dem Rohrstutzen 46 auf, so daß bei übergroßen Kräften keine Beschädigung des Meßelements 22 auftreten kann.

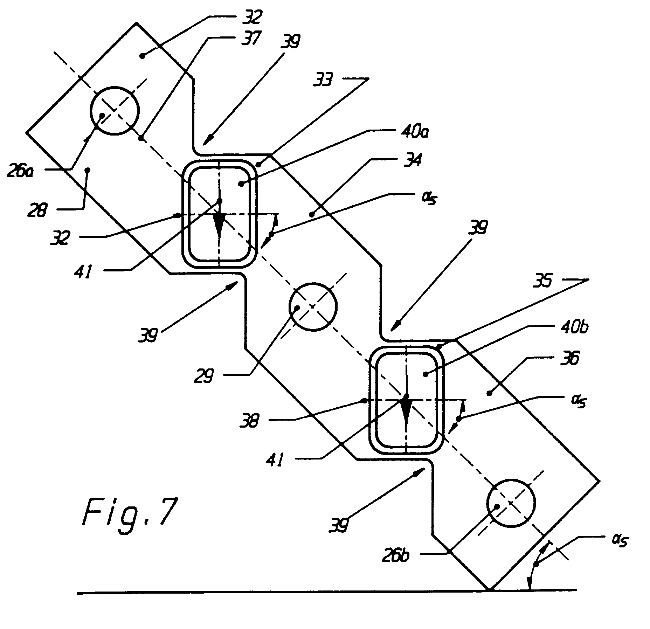

In der Figur 7 ist die Seitenansicht eines balkenförmigen Körpers eines Meßaufnehmers 22 dargestellt. Zur Verdeutlichung der Meßsituation ist der balkenförmige Körper 28 in Wiegestellung dargestellt. Dies ist die Stellung, die der balkenförmige Körper 28 einnimmt, wenn die Schwenkarme um den Schwenkwinkel $\alpha_s$ hochgeschwenkt sind. Der balkenförmige Körper 28 ist mittels der Befestigungsbolzen 26a und 26b am ersten Armteil und mittels des Bolzens 29 am zweiten Armteil befestigt. Die Bolzen 26a und 26b befinden sich in den Endabschnitten 32 und 36 während der Bolzen 29 im Mittelabschnitt 34 angeordnet ist. Zwischen dem Endabschnitt 32 und dem Mittelabschnitt 34 bzw. Endabschnitt 36 und dem Mittelabschnitt 34 ist jeweils ein gedrehter Abschnitt 33 bzw. 35 vorgesehen, der die Meßelemente 40a, 40b trägt, die beispielsweise Dehnungsmeßstreifen sein können. Die Achsen 38 dieser gedrehten Abschnitte 33, 35 sind um eine horizontale Achse um den Winkel $\alpha_s$ gegenüber der Längsachse 37 des balkenförmigen Körpers 28 gedreht. Die gedrehten Abschnitte 33, 35 werden durch die Einbringung von dreieckförmigen und versetzt angeordneten Ausnehmungen 39 ausgebildet.

Die Meßelemente 40a, 40b sind parallel zu diesen gedrehten Abschnitten 33, 35 ausgerichtet, so daß die Meßrichtung, die durch die Pfeile 41 gekennzeichnet ist, senkrecht zur Achse 38 steht. Damit wird erreicht, daß dann, wenn der Meßaufnehmer um den Schwenkwinkel $\alpha_s$ geschwenkt ist, die Meßrichtung 41 mit der Vertikalen zusammenfällt.

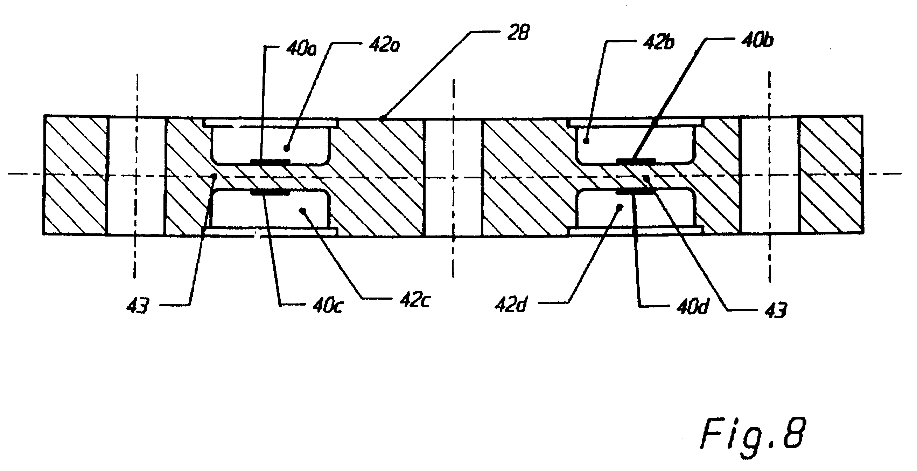

In der Figur 8 ist eine Draufsicht, teilweise im Schnitt, des balkenförmigen Körpers 28 dargestellt. Insgesamt sind vier Meßelemente 40a, b, c, d vorgesehen, die paarweise auf den Mittelstegen 43 im Bereich der Taschen 42a - d angeordnet sind.

## Patentansprüche

**1.** Vorrichtung zum Entleeren von Großraumbehältern (3) in einen Sammelbehälter (2) mit zwei parallel angeordneten und am Sammelbehälter um eine horizontale Achse (8) drehbar angelenkten Schwenkarmen (6a, b) von denen, jeder eine Aufnahmeeinrichtung (17a, b) für die Großraumbehälter aufweist, dadurch gekennzeichnet,

daß jeder Schwenkarm (6a, b) ein erstes, am Sammelbehälter (2) angelenktes Armteil (9a, b) und ein zweites, die Aufnahmeeinrichtung (17a, b) tragendes Armteil (12a, b) aufweist, wobei das zweite Armteil (12a, b) das erste Armteil (9a, b) zumindest teilweise in sich aufnimmt und im zweiten Armteil (12a, b) mindestens zwei Meßaufnehmer (22 bis 25) angeordnet sind, an denen jeweils beide Armteile (9a, b, 12a, b) befestigt sind,

daß an jedem Meßaufnehmer (22 bis 25) mindestens ein Meßelement (40a bis d) derart angeordnet ist, daß die Meßrichtung (41) des Meßelementes (40a bis d) bei einem vorgegebenen Schwenkwinkel $\alpha_s > 0$ der Schwenkarme (6a, b) mit der Vertikalen zusammenfällt, und

daß alle Meßaufnehmer (22 bis 25) an eine gemeinsame Gewichtsauswerteeinrichtung (45) angeschlossen sind.

**2.** Vorrichtung nach Anspruch 1, dadurch gekennzeichnet, daß das zweite Armteil (12a, b) aus einem über das erste Armteil (9a, b) gesteckten Rohr besteht, in dem die Meßaufnehmer (22 bis 25) angeordnet sind.

**3.** Vorrichtung nach Anspruch 1 oder 2, dadurch gekennzeichnet, daß die beiden zweiten Armteile (12a, b) über eine Verbindungsstrebe (15) miteinander verbunden und als U-förmige Rahmen (16) aus Hohlprofil ausgebildet sind, der mit seinen beiden Schenkeln über die Meßaufnehmer (22 bis 25) mit den ersten Armteilen (9a, b) verbunden ist, wobei die Verbindungsstrebe (15) im Bereich der freien Enden (11a, b) der ersten Armteile (9a, b) angeordnet ist.

**4.** Vorrichtung nach einem der Ansprüche 1 bis 3, dadurch gekennzeichnet, daß die Meßaufnehmer (22 bis 25) jeweils in der Nähe der Enden (10a, b, 11a, b, 13a, b, 14a, b) der ersten und zweiten Armteile (9a, b, 12a, b) angeordnet sind.

**5.** Vorrichtung nach einem der Ansprüche 1 bis 4, dadurch gekennzeichnet, daß der Meßaufnehmer (22 bis 25) als balkenförmiger Körper (28) ausgebildet ist, desse Längsachse (37) mit derjenigen der Armteile (9a, b, 12a, b) zusammenfällt, und

daß das Meßelement (22 bis 25) bezüglich der Längsachse (37) um den vorgegebenen Schwenkwinkel $\alpha_s$ gedreht angeordnet ist.

**6.** Vorrichtung nach Anspruch 5, dadurch gekennzeichnet, daß der balkenförmige Körper (28) zwischen seinen Endabschnitten (32, 36) mindestens einen gegenüber der Längsachse (37) des balkenförmigen Körpers (28) um den vorgegebenen Winkeln $\alpha_s$ gedrehten Abschnitt (33, 35) aufweist, auf dem das Meßelement (22 bis 25) angeordnet ist.

**7.** Vorrichtung nach Anspruch 6, dadurch gekennzeichnet, daß mindestens zwei gedrehte, über einen Mittelabschnitt (34) miteinander verbundene Abschnitte (33, 35) vorgesehen sind, die jeweils auf gegenüberliegenden Seiten ein Meßelement (40a bis d) tragen.

8. Vorrichtung nach Anspruch 6 oder 7, dadurch gekennzeichnet, daß der balkenförmige Körper (28) an seinen Endabschnitten (32, 36) und seinem Mittelabschnitt (34) jeweils einen Befestigungsbolzen (26, 29) aufweist, wobei zwei der Befestigungsbolzen (26) mit ihren beiden Enden mit dem einen Armteil (9a, b oder 12a, b) und ein Befestigungsbolzen (29) mit dem anderen Armteil (9a, b oder 12a, b) verbunden ist.

9. Vorrichtung nach einem der Ansprüche 1 bis 8, dadurch gekennzeichnet, daß der am zweiten Armteil (12a, b) angreifende Befestigungsbolzen (29) an seinen Enden jeweils eine Elastomerbuchse (30) aufweist, über die der Befestigungsbolzen (29) im zweiten Armteil (12a, b) gelagert ist.

10. Vorrichtung nach einem der Ansprüche 1 bis 9, dadurch gekennzeichnet, daß die Meßelemente (40a bis d) Dehnungsmeßstreifen sind.

## Claims

1. Device for emptying large capacity containers (3) into a collection container (2), having two pivoting arms (6a, b) rotatably hinged on the collection container about a horizontal axis (8) and arranged to be parallel, of which each has a receiving device (17a, b) for the large capacity containers, characterised in that each pivoting arm (6a, b) has a first arm part (9a, b) hinged to the collection container (2) and a second arm part (12a, b) supporting the receiving device (17a, b), wherein the second arm part (12a, b) absorbs the first arm part (9a, b) at least partly into itself, and at least two measuring recorders (22 to 25), to which in each case both arm parts (9a, b, 12a, b) are attached, are arranged in the second arm part (12a, b), in that at least one measuring element (40a to d) is arranged on each measuring recorder (22 to 25) such that the measuring direction (41) of the measuring element (40a to d) coincides with the vertical at a preset pivoting angle $\alpha_s$ > 0 for the pivoting arms (6a, b), and in that all measuring recorders (22 to 25) are connected to a common weight evaluation device (45).

2. Device according to claim 1, characterised in that the second arm part (12a, b) consists of a tube, in which the measuring recorders (22 to 25) are arranged, placed over the first arm part (9a, b).

3. Device according to claim 1 or 2, characterised in that the two second arm parts (12a, b) are connected to one another via a connecting strut (15) and are designed as a U-shaped frame (16) made from hollow profile which is connected to the first arm parts (9a, b) via the measuring recorders (22 to 25) using its two limbs, wherein the connecting strut (15) is arranged in the region of the free ends (11a, b) of the first arm parts (9a, b).

4. Device according to one of claims 1 to 3, characterised in that the measuring recorders (22 to 25) are arranged in each case in the vicinity of the ends (10a, b, 11a, b, 13a, b, 14a, b) of the first and second arm parts (9a, b, 12a, b).

5. Device according to one of claims 1 to 4, characterised in that the measuring recorder (22 to 25) is designed as a beam-like body (28), the longitudinal axis (37) of which coincides with that of the arm parts (9a, b, 12a, b), and in that the measuring element (22 to 25) is arranged to be rotated about the preset pivoting angle $\alpha_s$ with respect to the longitudinal axis (37).

6. Device according to claim 5, characterised in that the beam-like body (28) has at least one section (33, 35) rotated about the preset angle $\alpha_s$ with respect to the longitudinal axis (37) of the beam-like body (28) between its end sections (32, 36), on which section (33, 35) the measuring element (22 to 25) is arranged.

7. Device according to claim 6, characterised in that at least two rotated sections (33, 35) connected to one another via a middle section (34) are provided and in each case support a measuring element (40a to d) on opposite sides.

8. Device according to claim 6 or 7, characterised in that the beam-like body (28) has in each case an attachment bolt (26, 29) on its end sections (32, 36) and its middle section (34), wherein two of the attachment bolts (26) are connected to one arm part (9a, b or 12a, b) using their two ends and an attachment bolt (29) is connected to the other arm part (9a, b or 12a, b).

9. Device according to one of claims 1 to 8, characterised in that the attachment bolt (29) acting on the second arm part (12a, b) has on each of its ends an elastomer bush (30), by means of which the attachment bolt (29) is mounted in the second arm part (12a, b).

10. Device according to one of claims 1 to 9, characterised in that the measuring elements (40a to d) are wire strain gauge.

## Revendications

1. Dispositif pour le vidage de récipients collectifs (3) dans un conteneur (2), muni de deux bras pivotants (6a, b) disposés parallèlement et articulés au conteneur de manière tournante autour d'un axe horizontal (8), chacun d'eux comportant un dispositif de levage (17a, b) destiné au récipient collectif, caractérisé en ce que,

chaque bras pivotant (6a, b) comporte une première partie de bras (9a, b) articulée au conteneur (2), et une deuxième partie de bras (12a, b) portant le mécanisme de levage (17a, b), la deuxième partie de bras (12a, b) logeant au moins partiellement en elle la première partie de bras (9a, b) et au moins deux capteurs de mesure (22 à 25) étant logés dans la deuxième partie de bras (12a, b), auxquels sont fixées respectivement les deux parties de bras (9a, b, 12a, b),

au moins un élément de mesure (40a à d) est disposé sur chaque capteur de mesure (22 à 25) afin que la direction de mesure (41) de l'élément de mesure (40a à d) coïncide avec la verticale pour un angle de rotation prédéterminé $\alpha_s > 0$ des bras de rotation (6a, b), et tous les capteurs de mesure (22 à 25) sont raccordés à un dispositif de détermination de poids commun (45).

2. Dispositif selon la revendication 1, caractérisé en ce que la deuxième partie de bras (12a, b) se compose d'un tube enfoncé sur la première partie de bras (9a, b), dans lequel sont placés les capteurs de mesure (22 à 25).

3. Dispositif selon la revendication 1 ou 2, caractérisé en ce que les deux deuxièmes parties de bras (12a, b) sont reliées l'une à l'autre par un montant de liaison (15) et sont formées comme un cadre en U (16) à profil creux, qui est relié aux premières parties de bras (9a, b) par l'intermédiaire des capteurs de mesure (22 à 25) à l'aide de ses deux branches, le montant de liaison (15) étant placé dans la région des extrémités libres (11a, b) des premières parties de bras (9a, b).

4. Dispositif selon l'une quelconque des revendications 1 à 3, caractérisé en ce que les capteurs de mesure (22 à 25) sont placés respectivement au voisinage des extrémités (10a, b, 11a, b, 13a, b, 14a, b) des première et deuxième parties de bras (9a, b, 12a, b).

5. Dispositif selon l'une quelconque des revendications 1 à 4, caractérisé en ce que le capteur de mesure (22 à 25) est développé en corps en forme de barre (28), dont l'axe longitudinal (37) coïncide avec celui des parties de bras (9a, b, 12a, b), et

en ce que l'élément de mesure (22 à 25) est disposé de manière tournée d'un angle de rotation prédéterminé as relativement à l'axe longitudinal (37).

6. Dispositif selon la revendication 5, caractérisé en ce que le corps en forme de barre (28) comporte entre ses secteurs terminaux (32, 36) au moins un secteur (33, 35) tourné d'un angle prédéterminé as par rapport à l'axe longitudinal (37) du corps en forme de barre (28), sur lequel est placé l'élément de mesure (22 à 25).

7. Dispositif selon la revendication 6, caractérisé en ce qu'il est prévu au moins deux secteurs (33, 35) tournés, reliés entre eux par un secteur milieu (34), qui portent à chaque fois un élément de mesure (40a à d) sur des côtés opposés.

8. Dispositif selon la revendication 6 ou 7, caractérisé en ce que le corps en forme de barre (28) comporte au niveau de ses secteurs terminaux (32, 36) et au niveau de son secteur milieu (34) à chaque fois un tourillon de fixation (26, 29), deux des tourillons de fixation (26) étant reliés à l'aide de leurs deux extrémités avec la première partie de bras (9a, b ou 12a, b) et un tourillon de fixation (29) étant relié avec l'autre partie de bras (9a, b ou 12a, b).

9. Dispositif selon l'une quelconque des revendications 1 à 8, caractérisé en ce que le tourillon de fixation (29) agissant sur la deuxième partie (12a, b) comporte à ses extrémités respectivement un coussinet en élastomère (30), grâce auquel le tourillon de fixation (29) est logé dans la deuxième partie de bras (12a, b).

10. Dispositif selon l'une quelconque des revendications 1 à 9, caractérisé en ce que les éléments de mesure (40a à d) sont des jauges de contrainte.

**Fig. 1**

45 2 44 1 5 8 7 6a,b $\alpha_S$ 21 3

EP 0 588 272 B1

8

Fig.2

EP 0 588 272 B1

Fig. 3

Fig.4

Fig.5

_Fig.6_

Fig.7

Fig.8